# EUROPEAN PATENT SPECIFICATION

(11) **EP 2 189 681 B1**
(45) Date of publication and mention of the grant of the patent: **08.06.2011**
(21) Application number: 08425750.0
(22) Date of filing: 25.11.2008
(51) Int. Cl.: F16H 3/00, F16H 63/20, F16H 63/32

(54) **Double-clutch gearbox**
Doppelkupplungsgetriebe
Boîte de vitesse à double embrayage

(43) Date of publication of application: 26.05.2010
(73) Proprietor: Magneti Marelli S.p.A., Corbetta (MI) (IT)
(72) Inventor: Palazzetti, Andrea, 10051 Avigliana (IT); Amisano, Fabrizio, 10144 Torino (IT); Medico, Giuseppe, 10098 Rivoli (IT)
(74) Representative: Bergadano, Mirko

(56) References cited:
- EP-A- 0 702 172
- EP-A- 1 538 372
- DE-A1- 10 108 881
- JP-A- 3 189 474

## Description

### TECHNICAL FIELD

The present invention relates to a double-clutch gearbox.

### BACKGROUND ART

Servo-controlled drives, which are structurally similar to a manual drive of the traditional type, except for the clutch pedal and the gear selection lever traditionally operated by the driver which are replaced by corresponding electric or hydraulic servo-controls, are increasingly widespread. When using a servo-controlled drive, the driver only needs to send the order to shift up or down to a drive control unit and the drive control unit autonomously shifts by operating both the engine and the servo-controls associated with clutch and gearbox.

In order to reduce the time required for shifting and to eliminate the "drive torque gap" which occurs when shifting by opening the clutch, servo-controlled drives provided with a double-clutch gearbox have been suggested. In a double-clutch gearbox, the drive shaft transmits motion to two coaxial clutches, each of which transmits in turn the motion to a respective primary gearbox shaft; the two primary gearbox shafts are coaxial, are arranged inside each other and are coupled to a common secondary shaft, which transmits the motion to the drive wheels by means of respective gears, each of which has its own drive ratio defining a gear. In order to allow the correct operation of the double-clutch gearbox, all the odd gears are coupled to the same primary shaft, while all the even gears are coupled to the other primary shaft. Typically, each gear comprises a primary toothed wheel which is integral with the respective primary shaft and a secondary toothed wheel which permanently meshes with the primary toothed wheel, is idly mounted to the secondary shaft and may be made integral with the secondary shaft by means of a synchronizer thereof, which is axially movable along the secondary shaft.

Normally, each synchronizer is arranged between two secondary gears and is actuated by a respective fork which is axially displaced along the secondary shaft in the two directions for displacing the synchronizer between two limit engaging positions, in each of which the synchronizer engages a respective secondary gear, and an intermediate idle position, in which the synchronizer does not engage any of the two secondary gears. Furthermore, each fork is actuated by a finger integral with a control shaft of a gear actuator; normally, the gear actuator impresses an axial translational movement on the control shaft, and thus on the finger integral with the control shaft, for selecting the gear range (i.e. for selecting the fork to be actuated), and a rotational movement for engaging/disengaging the gears (i.e. for displacing the fork to be actuated).

Two gear actuators are included in the currently marketed double-clutch gearboxes, each of which is associated with a respective primary shaft and therefore actuates all and only the forks coupled to its own primary shaft. However, the presence of two different gear actuators implies an increase in the number of components, and thus increasing cost, increasing weight, increasing volumes, and a greater possibility of malfunctions.

EP 1 538 372 A2 describes a double-clutch gearbox according to the preamble of claim 1 and provided with two primary shafts and one secondary shaft, a plurality of synchronisers actuated by shift rails, a single control shaft controlled by an actuator, this said control shaft has only one finger.

DE10108881A1 describes a double-clutch gearbox provided with two primary shafts and two secondary shafts; each secondary shaft is provided with two synchronizers, which are actuated by means of two forks provided with respective sliding rods. Each rod is provided at a free end with a first coupling element, which is adapted to be engaged by a second coupling element integral with a control shaft, which is actuated by a single gear actuator, which rotates the control shaft about a longitudinal axis and axially translates the control shaft along the longitudinal axis. The whole is structured to allow the control shaft to couple with a rod for engaging a subsequent gear without preventively disengaging a previously engaged gear.

### DISCLOSURE OF INVENTION

It is the object of the present invention to provide a double-clutch gearbox, which is free from the above-described drawbacks and which is specifically easy and cost-effective to be implemented in addition to be light, compact and reliable.

According to the present invention, a double-cutch gearbox is provided as claimed in the appended claims.

### BRIEF DESCRIPTION OF THE DRAWINGS

The present invention will now be described with reference to the accompanying drawings, which show a non-limitative embodiment thereof, in which:
- figure 1 is a diagrammatic view, with parts removed for clarity, of a double-clutch gearbox made in accordance with the present invention;
- figure 2 is a diagrammatic, perspective view, with parts removed for clarity, of a fork of a synchronizer of the double-clutch gearbox in figure 1; and
- figures 3-7 are diagrammatic views of some movements made by a movable finger of the double-clutch gearbox in figure 1 for engaging a first gear I and then a second gear II.

### PREFERRED EMBODIMENTS OF THE INVENTION

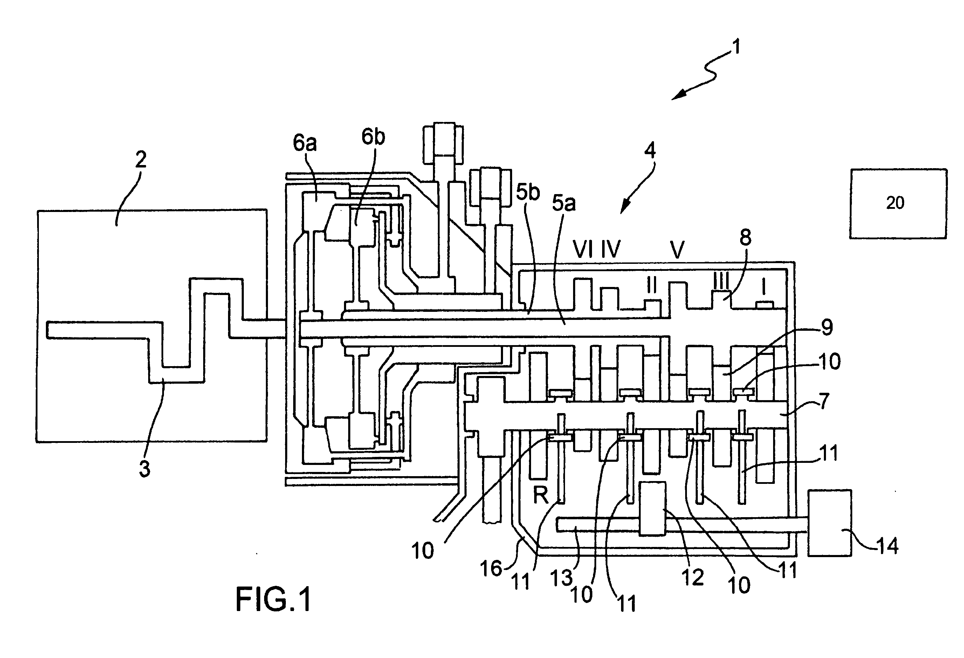

In figure 1, numeral 1 indicates as a whole a servo-assisted drive for a car (not shown) propelled by an internal combustion engine 2, which is provided with a drive shaft 3.

The servo-assisted drive 1 comprises a servo-assisted double-clutch gearbox 4, which is provided with a pair of reciprocally coaxial, independent primary shafts 5, inserted inside each other. Furthermore, the double-clutch gearbox 4 comprises two coaxial clutches 6 arranged in series, each of which is adapted to connect a respective primary shaft 5 to the drive shaft 3 of the internal combustion engine 2. The double-clutch gearbox 4 comprises a single secondary shaft 7 connected to a differential (not shown) which transmits the motion to the drive wheels (not shown).

The double-clutch gearbox 4 shown in the accompanying figure has six forward gears indicated by Roman numerals (first gear I, second gear II, third gear III, fourth gear IV, fifth gear V, and sixth gear VI) and one reverse (indicated by the letter R). Each primary shaft 5 and the secondary shaft 7 are mechanically coupled to one another by means of a plurality of gear pairs, each of which defines a respective gear and a comprises a primary gear 8 mounted to the primary shaft 5 and a secondary gear 9 mounted to the secondary shaft 7. In order to allow the correct operation of the double-clutch gearbox 4, all the odd gears (first gear I, third gear III, fifth gear V) are coupled to a same primary shaft 5a, while all the even gears (second gear II, fourth gear IV, and sixth gear VI) are coupled to the other primary shaft 5b.

Each primary gear 8 is keyed onto a respective primary shaft 5 to rotate, again integrally, with the primary shaft 5, and permanently meshes with the respective secondary gear 9; on the other hand, each secondary gear 9 is idly mounted to the secondary shaft 7. Furthermore, the double-clutch gearbox 4 comprises four synchronizers 10, each of which is coaxially mounted to the secondary shaft 7, is arranged between two secondary gears 9 (except for the synchronizer 10 of the fifth gear V, which is arranged by the side of a single secondary gear 9), and is adapted to be actuated for alternatively engaging the two respective secondary gears 9 to the secondary shaft 7 (i.e. for alternatively making the two respective secondary gears 9 angularly integral with the secondary shaft 7). In other words, each synchronizer 10 comprises a guiding sleeve which may be displaced in a direction in order to engage a secondary gear 9 with the secondary shaft 7, or may be displaced in the other direction in order to engage the other secondary gear 9 with the secondary shaft 7 (except for the synchronizer 10 of the fifth gear V, which engages a single secondary gear 9 with the secondary shaft 7).

Each synchronizer 10 is arranged between two secondary gears 9 (except for the synchronizer 10 of the fifth gear V, which is arranged by the side of a single secondary gear 9) and is actuated by a respective fork 11, which is axially displaced along the secondary shaft 7 in the two directions for displacing the guiding sleeve of the synchronizer 10 between the two engaging positions, in each of which the synchronizer 10 engages a respective secondary gear 9, and an intermediate idle position, in which the synchronizer 10 does not engage any of the two secondary gears 9 (as previously mentioned, the synchronizer 10 of the fifth gear V has a single engagement position). Furthermore, each fork 11 is actuated by a finger 12 which is moved by a control shaft 13 of a single, common gear actuator 14; the gear actuator 14 impresses an axial translational movement (i.e. parallel to a longitudinal axis 15 of the control shaft 13) and a rotational movement about the longitudinal axis 15 of the control shaft 13. It is worth noting that the control shaft 13 is provided with a single finger 12 which controls all forks 11; this constructional solution allows to simplify both the construction and the control of the double-clutch gearbox 4.

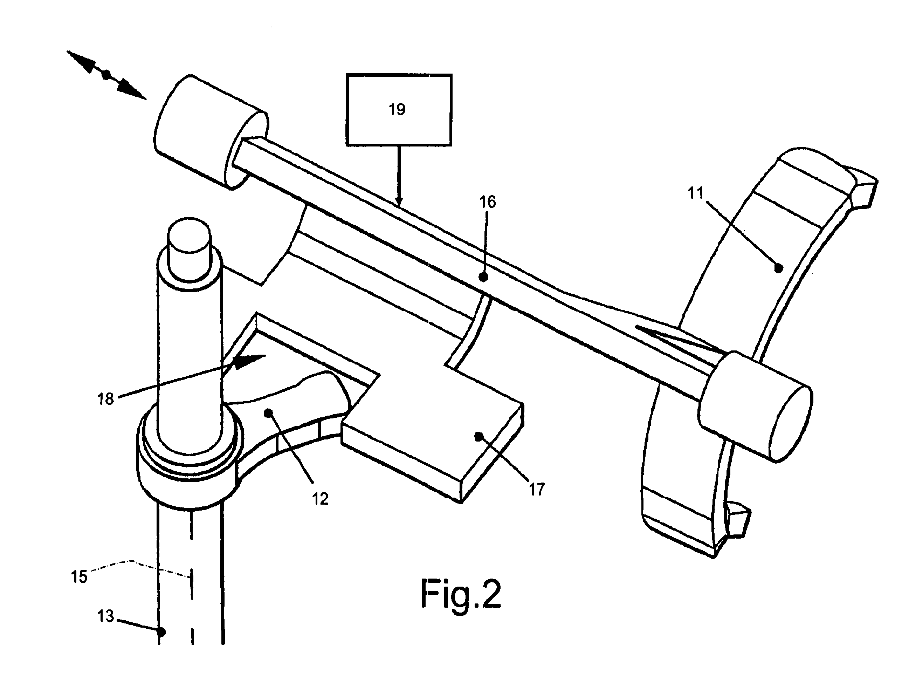

As shown in figure 2, each fork 11 is carried by a rod 16, which is axially and slidingly mounted to allow the fork 11 to be axially displaced along the secondary shaft 7 in the two directions. Each rod 16 is integral with a plate 17, in which a catch 18 is defined, i.e. a rectangular seat in which the finger 12 may be inserted for axially pushing the plate 17, and thus the rod 16, in the two directions. In figure 2, it is apparent that the axial translational movement along the longitudinal axis 15 of the control shaft 13 allows to insert the finger 12 into a given catch 18, and therefore allows to select the gear range, while the rotational movement about the longitudinal axis 15 of the control shaft 13 allows to displace a corresponding fork 11, and thus allows to engage or disengage a gear of the currently selected range.

Each fork 11 is associated with a retaining device 19 which is, for example, mechanically coupled to the rod 16, is made by means of the known spring and ball architecture, and is adapted to keep the fork 11 in the current position with a constant, predetermined retaining force. The function of each retaining device 19 is to keep the fork 11 in the current position, thus avoiding random, uncontrolled and undesired movements of the fork 11; obviously, according to the modes described below, the control shaft 13 is able to apply a driving force to each fork 11, sufficiently higher than the retaining force generated by the respective retaining device 19, for ensuring the desired displacement of the fork 11.

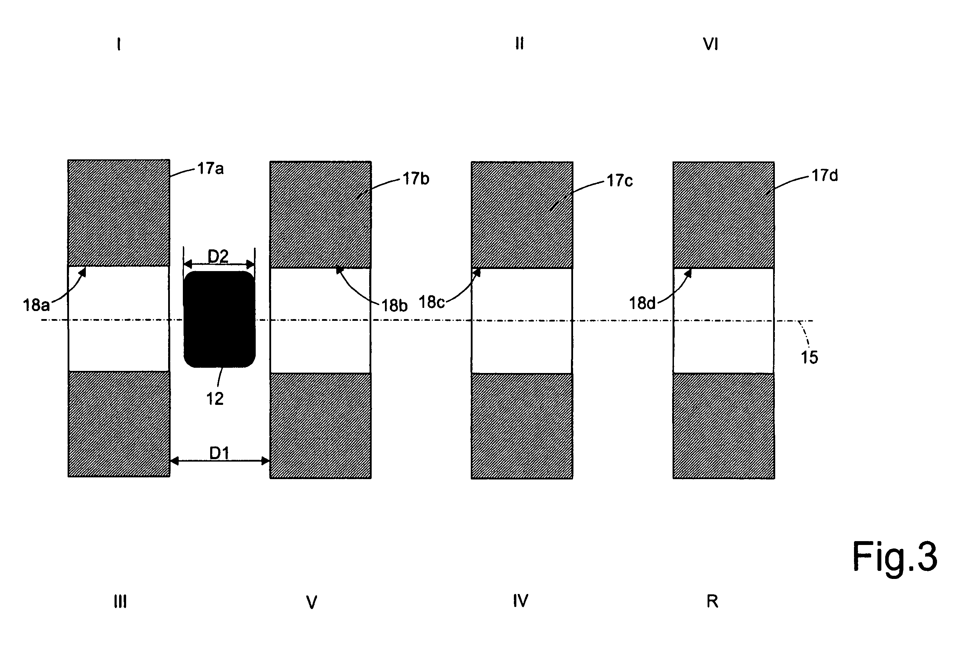

As shown in figure 3, the four catches 18 are arranged parallelly aligned with the longitudinal axis 15 of the control shaft 13, are equally spaced to one another, and are reciprocally spaced by a distance D1 greater than the dimension D2 of the finger 12, so as to allow the passage of the finger 12 between two catches 18 arranged side-by-side. In other words, there is a void between the two catches 18 arranged side-by-side which has a dimension D1 greater than the dimension D2 of the finger 12 so as to allow the passage of the finger 12 in such a void; such a feature is essential for allowing the finger 12 to be displaced between the catches 18 by following the shortest, and therefore fastest, path.

According to a preferred embodiment, the distance D1 between two catches 18 arranged side-by-side is between a minimum value consisting in the dimension D2 of the finger 12 (actually, it is always slightly larger to take into account both manufacturing tolerances and positioning errors made by the gear actuator 14) and a maximum value indicatively equal to double the dimension D2 of the finger 12. By containing the distance D1 between the two catches 18 arranged side-by-side it is possible to make the assembly of catches 18 more compact, and thus reduce the axial stroke that the finger 12 must cover to be displaced between the catches 18; in this manner, gear engagement is faster.

The servo-assisted drive 1 comprises a control unit 20 (diagrammatically shown in figure 1), which drives the gear actuator 14 for engaging/disengaging the gears and drives the clutch actuators (not shown) which control the opening and closing of the two clutches 6.

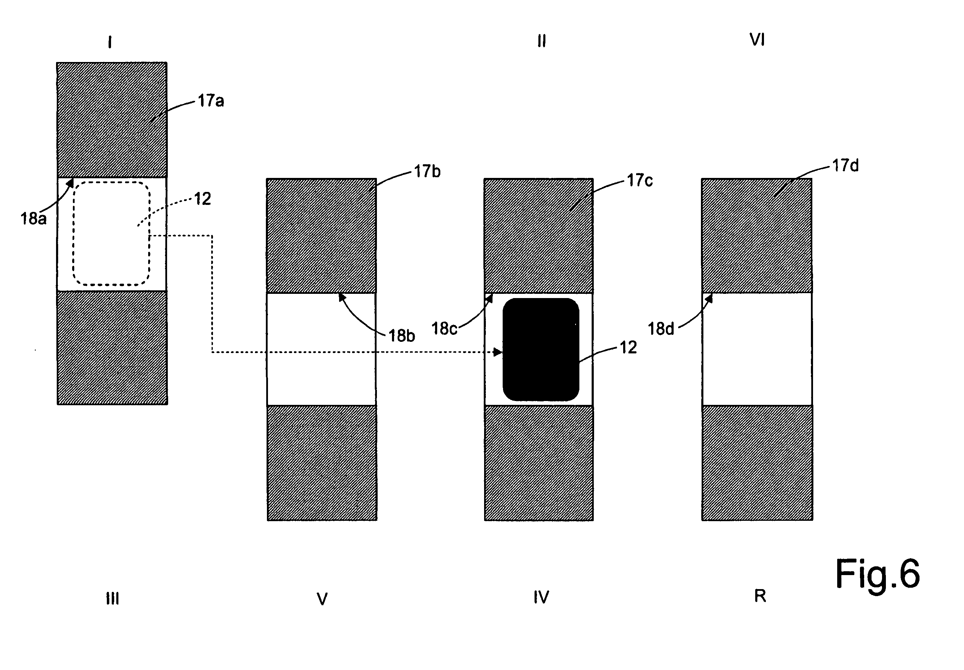

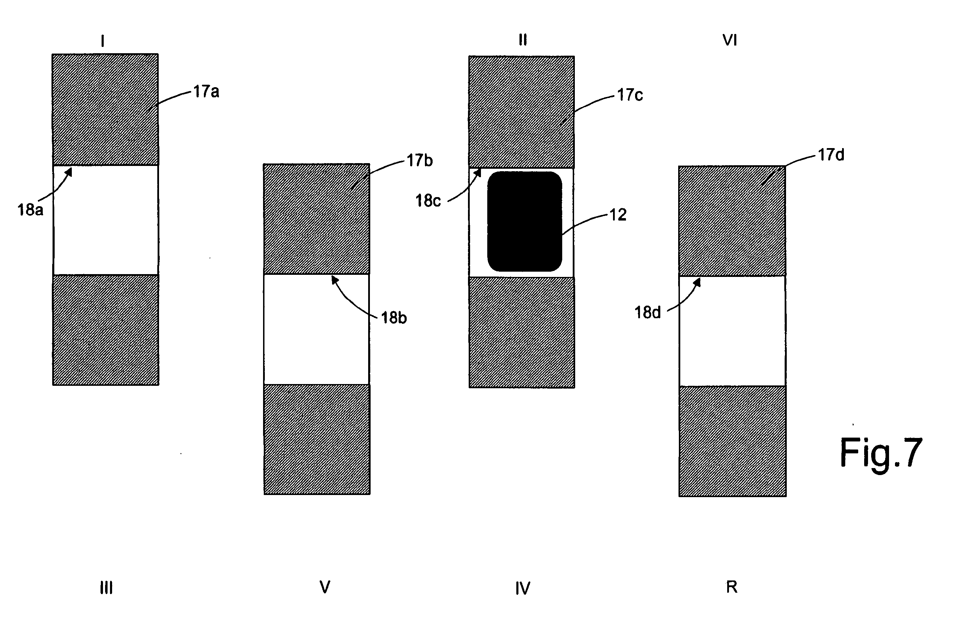

The operation of the double-clutch gearbox 4 is disclosed below with reference to figures 3-7; specifically, the engagement mode of the first gear I from an idle condition (figures 3-5) and the subsequent engagement mode of the second gear II (figures 6 and 7) are described.

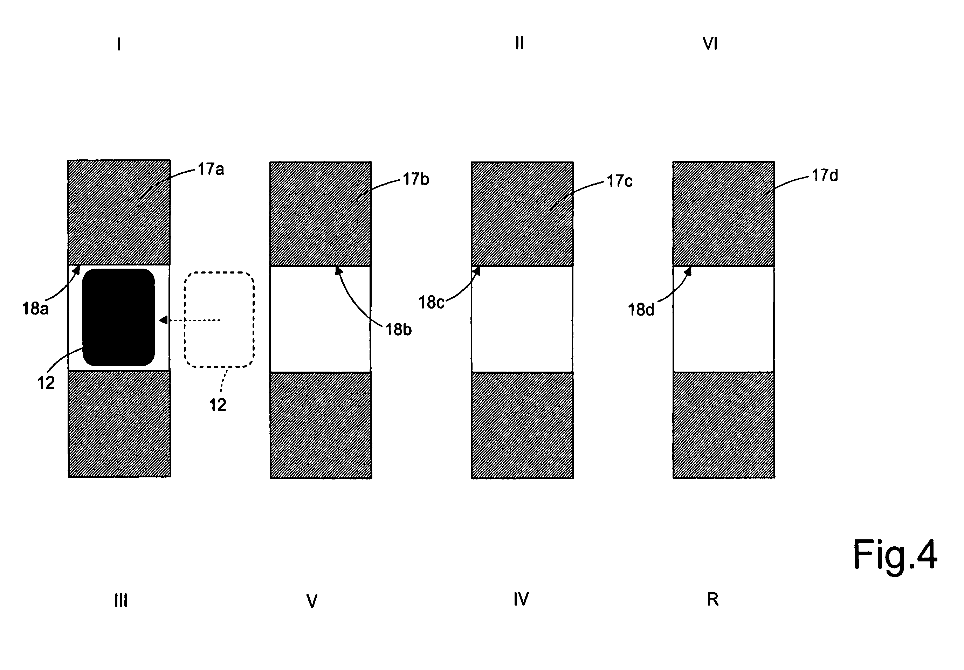

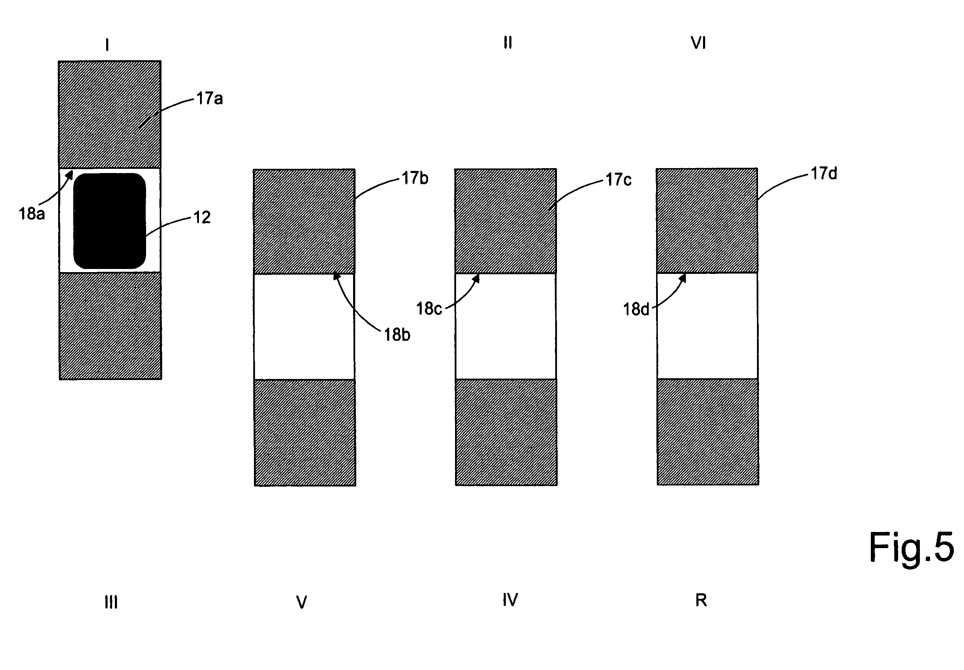

Figure 3 shows an idle condition, in which no gear is engaged, the two clutches 6 are open (i.e. the drive shaft 3 is disconnected from both the primary shafts 5), and the finger 12 is in the intermediate position between the two coupling catches 18a and 18b. The fork 11 connected to the catch 18a is required to be rotated in order to engage the first gear I,; accordingly, the gear actuator 14 axially displaces the control shaft 13 along the longitudinal axis 15 so as to make the finger 12 engage the catch 18a, as shown in figure 4. Once the finger 12 has been inserted into the catch 18a, the gear actuator 14 rotates the control shaft 13 (and thus the finger 12 integral with the control shaft 13) about the longitudinal axis 15 in order to push the plate 17a (and thus the corresponding rod 16 and the corresponding fork 11) in the required direction to engage the first gear I, as shown in figure 5; if the third gear III had been required to be engaged (or the first gear I had been required to be disengaged), then the gear actuator 14 would have rotated the control shaft 13 (and thus the finger 12 integral with the control shaft 13) in the opposite direction. As previously mentioned, when displacing the plate 17a (and thus the corresponding rod 16 and the corresponding fork 11), the gear actuator 14 must overcome the retaining torque generated by the retaining device 19.

Once the first gear I has been engaged in the above-described manner, the clutch 6a may be closed to transmit the motion from the drive shaft 3 to the drive wheels (not shown) at the drive ratio of the first gear 1. Furthermore, once the first gear I has been engaged in the above-described manner, the gear actuator 14 also acts to engage the second gear II by displacing the plate 17c (and thus the corresponding rod 16 and the corresponding fork 11).

To engage the second gear II, the gear actuator 14 axially displaces the control shaft 13 without performing any rotation so as to make the finger 12 disengage the catch 18a; this operation does not imply the disengagement of the first gear I in virtue of the retaining torque exerted by the retaining device 19 which prevents the plate 17a (and thus the corresponding rod 16 and the corresponding fork 11) from being displaced, except under the bias of the gear actuator 14. Once the finger 12 has been disengaged from the catch 18a, the gear actuator 14 rotates the control shaft 13 to align the finger 12 with the catch 18c and thus impresses a new axial displacement on the control shaft 13 so as to make the finger 12 engage the catch 17c, as shown in figure 6. Once the finger 12 of the control shaft 13 has been inserted into the catch 18c, the gear actuator 14 rotates the control shaft 13 about the longitudinal axis 15 for rotating the plate 17c (and thus the corresponding rod 16 and the corresponding fork 11) in the required direction to engage the second gear II; if the fourth gear IV had been required to be engaged (or the second gear II had been required to be disengaged), then the gear actuator 14 would have rotated the plate 17c (and thus the corresponding rod 16 and the corresponding fork 11) in the opposite direction. As previously mentioned, when rotating the plate 17c, the gear actuator 14 must overcome the retaining torque generated by the corresponding retaining device 19.

Once the second gear II has been engaged in the above-described manner, the clutch 6b may be closed and at the same time the clutch 6a must be opened to transmit the motion from the drive shaft 3 to the drive wheels (not shown) at the drive ratio of the second gear II. Furthermore, once the second gear II has been engaged in the above-described manner, the gear actuator 14 acts to disengage the first gear I, and then to engage the third gear III by rotating the plate 17a (and thus the corresponding rod 16 and the corresponding fork 11), and so on.

According to a possible embodiment, under stand-by conditions, if a gear which transmits the motion is present, the finger 12 is arranged inside the catch 18 corresponding to the gear which transmits the motion to prevent the accidental, involuntary disengagement of the gear. In other words, once the finger 12 has been moved to engage the current gear which transmits the motion and to engage the next gear (determined by means of a prediction algorithm), the finger 12 is arranged inside the catch 18 corresponding to the gear which transmits the motion so as to prevent an accidental, involuntary displacement of the catch 17, which would determine an accidental, involuntary disengagement of the gear.

The above-described double-clutch gearbox 4 has several advantages, because it is simple, cost-effective and compact, and requires the use of only one gear actuator 14, which is able to effectively and efficiently actuate all the forks 11.

## Claims

1. A double-clutch gearbox (4) comprising:
two primary shafts (5);
at least one secondary shaft (7);
a plurality of gear pairs (8, 9), each of which mechanically couples the primary shaft (5) to the secondary shaft (7), defines a respective gear and comprises a primary gear (8) mounted to the primary shaft (5) and a secondary gear (9), which is mounted to the secondary shaft (7) and permanently meshes with the primary gear (8);
a plurality of synchronizers (10), each of which is coaxially mounted to a shaft (5; 7), is coupled to a gear (10; 11) of at least one gear pair, and is adapted to be actuated to engage the gear (10; 11) with the shaft (5; 7);
a plurality of forks (11) which actuate the synchronizers (10), are movably mounted and are provided with corresponding catches (18);
a single control shaft (13) rotationally mounted about a longitudinal axis (15) and axially sliding along the longitudinal axis (15); and
a single gear actuator (14) connected to the control shaft (13) to rotate the control shaft (13) about the longitudinal axis (15) and to axially displace the control shaft (13) along the longitudinal axis (15);
the control shaft (13) supports only one finger (12) which is adapted to engage one catch (18) at a time to impress a displacement to the corresponding fork (11); and the double-clutch gearbox (4) is **characterized in that**:
the catches (18) are arranged parallelly aligned to the longitudinal axis (15) of the control shaft (13) and are reciprocally spaced by a distance (D1) greater than the dimension (D2) of the finger (12) so as to allow the passage of the finger (12) between two catches (18) arranged side-by-side.

2. A double-clutch gearbox (4) according to claim 1, wherein the catches (18) are equally spaced to one another.

3. A double-clutch gearbox (4) according to claim 1 or 2, wherein the distance (D1) between two catches (18) arranged side-by-side is slightly greater than the dimension (D2) of the finger (12).

4. A double-clutch gearbox (4) according to claim 1, 2 or 3, wherein the distance (D1) between two catches (18) arranged side-by-side is between a minimum value consisting in the dimension (D2) of the finger (12) and a maximum value equal to double the dimension (D2) of the finger (12).

5. A double-clutch gearbox (4) according to any one of the claims from 1 to 4, and comprising for each fork (11) a corresponding retaining device (19), which is adapted to keep the fork (11) in the current position with a constant, predetermined retaining force; the control shaft (13) is able to apply a driving force to each fork (11), sufficiently higher than the retaining force generated by the respective retaining device (19) for ensuring the desired displacement of the fork (11).

6. A double-clutch gearbox (4) according to any one of the claims from 1 to 5, wherein each fork (11) is carried by a rod (16), which is axially and slidingly mounted and supports a plate (17) in which the corresponding catch (18) is defined.

7. A double-clutch gearbox (4) according to any one of the claims from 1 to 6, wherein under stand-by conditions, if a gear which transmits the motion is present, the finger (12) is arranged inside the catch (18) corresponding to the gear which transmits the motion to prevent the accidental, involuntary disengagement of the gear.

## Patentansprüche

1. Doppelkupplungsgetriebe (4) mit:
zwei primären Wellen (5);
mindestens einer sekundären Welle (7);
einer Vielzahl von Zahnradpaaren (8, 9), von denen jedes die primäre Welle (5) mechanisch mit der sekundären Welle (7) verbindet, einen entsprechenden Gang definiert und ein primäres Zahnrad (8), das an der primären Welle (5) angebracht ist, und ein sekundäres Zahnrad (9), das an der sekundären Welle (7) angebracht und in ständigem Eingriff mit dem primären Zahnrad (8) ist, aufweist;
einer Vielzahl von Synchronringen (10), von denen jeder koaxial auf einer Welle (5; 7) angebracht ist, mit einem Zahnrad (10; 11) mindestens eines Zahnradpaars verbunden und angepasst ist, betätigt zu werden, um das Zahnrad (10; 11) mit der Welle (5; 7) in Eingriff zu bringen;
einer Vielzahl von Schaltgabeln (11), welche die Synchronringe (10) betätigen, beweglich angebracht sind und mit entsprechenden Mitnehmern (18) versehen sind;
einer einzelnen Steuerwelle (13), die um eine Längsachse (15) drehend angebracht ist und entlang der Längsachse (15) axial gleitet; und
einem einzelnen Zahnradstellantrieb (14), der mit der Steuerwelle (13) verbunden ist, um die Steuerwelle (13) um die Längsachse (15) zu drehen und die Steuerwelle (13) entlang der Längsachse (15) zu verschieben;
die Steuerwelle (13) trägt nur einen Finger (12), der angepasst ist, jeweils einen Mitnehmer (18) zu ergreifen, um auf die entsprechende Schaltgabel (11) eine Verschiebung zu übertragen; und das Doppelkupplungsgetriebe (4) ist **dadurch gekennzeichnet, dass**:
die Mitnehmer (18) parallel zur Längsachse (15) der Steuerwelle (13) ausgerichtet angeordnet und voneinander durch einen Abstand (D1) getrennt sind, der größer als das Maß (D2) des Fingers (12) ist, um es dem Finger (12) zu erlauben, zwischen zwei nebeneinander angeordneten Mitnehmern (18) durchzutreten.

2. Doppelkupplungsgetriebe (4) gemäß Anspruch 1, bei dem die Mitnehmer (18) den gleichen Abstand voneinander aufweisen.

3. Doppelkupplungsgetriebe (4) gemäß Anspruch 1 oder 2, bei dem der Abstand (D1) zwischen zwei nebeneinander angeordneten Mitnehmern (18) etwas größer als das Maß (D2) des Fingers (12) ist.

4. Doppelkupplungsgetriebe (4) gemäß Anspruch 1, 2 oder 3, bei dem der Abstand (D1) zwischen zwei nebeneinander angeordneten Mitnehmern (18) zwischen einem minimalen Wert, der durch das Maß (D2) des Fingers (12) gegeben ist, und einem maximalen Wert, der gleich dem Doppelten des Maßes (D2) des Fingers (12) ist, liegt.

5. Doppelkupplungsgetriebe (4) gemäß einem der Ansprüche 1 bis 4 und mit einer entsprechenden Festhaltevorrichtung (19) für jede Schaltgabel (11), die angepasst ist, die Schaltgabel (11) mit einer konstanten, zuvor bestimmten Festhaltekraft in der gegenwärtigen Stellung zu halten; die Steuerwelle (13) ist fähig, auf jede Schaltgabel (11) eine Antriebskraft auszuüben, die ausreichend höher ist als die von der entsprechenden Festhaltevorrichtung (19) erzeugte Festhaltekraft zum Sicherstellen der gewünschten Verschiebung der Schaltgabel (11).

6. Doppelkupplungsgetriebe (4) gemäß einem der Ansprüche 1 bis 5, bei dem jede Schaltgabel (11) von einer Stange (16) getragen wird, die axial und gleitend angebracht ist und eine Platte (17) hält, in welcher der entsprechende Mitnehmer (18) definiert wird.

7. Doppelkupplungsgetriebe (4) gemäß einem der Ansprüche 1 bis 6, bei dem unter Bereitschaftsbedingungen, wenn ein die Bewegung übertragendes Zahnrad vorhanden ist, der Finger (12) innerhalb des Mitnehmers (18) entsprechend dem die Bewegung übertragenden Zahnrad angeordnet ist, um das zufällige, ungewollte Ausrücken des Zahnrades zu verhindern.

## Revendications

1. Boîte de vitesses à double embrayage (4) comprenant :
deux arbres primaires (5) ;
au moins un arbre secondaire (7) ;
une pluralité de paires de pignons (8, 9), dont chacune accouple mécaniquement l'arbre primaire (5) à l'arbre secondaire (7), définit un rapport respectif et comporte un pignon primaire (8) monté sur l'arbre primaire (5) et un pignon secondaire (9), lequel est monté sur l'arbre secondaire (7) et engrène en permanence avec le pignon primaire (8) ;
une pluralité de synchroniseurs (10) dont chacun est monté coaxialement sur un arbre (5 ; 7), est accouplé à un pignon (10 ; 11) d'au moins une paire de pignons et est adapté pour être actionné pour mettre le pignon (10 ; 11) en prise avec l'arbre (5 ; 7) ;
une pluralité de fourchettes (11) qui actionnent les synchroniseurs (10), sont montées mobiles et sont dotées de crans correspondants (18) ;
une unique barre de commande (13) montée rotative autour d'un axe longitudinal (15) et coulissant axialement le long de l'axe longitudinal (15) ; et
un unique actionneur de rapports (14) relié à la barre de commande (13) pour faire tourner la barre de commande (13) autour de l'axe longitudinal (15) et pour déplacer la barre de commande (13) axialement le long de l'axe longitudinal (15) ;
la barre de commande (13) supportant seulement un doigt (12) qui est adapté pour entrer en prise avec un seul cran (18) à la fois pour imprimer un déplacement à la fourchette (11) correspondante ; et
la boîte de vitesses à double embrayage étant **caractérisée en ce que** :
les crans (18) sont disposés alignés parallèlement à l'axe longitudinal (15) de la barre de commande (13) et sont espacés mutuellement d'une distance (D1) plus grande que la dimension (D2) du doigt (12) de manière à autoriser le passage du doigt (12) entre deux crans (18) disposés côte-à-côte.

2. Boîte de vitesses à double embrayage (4) selon la revendication 1, dans laquelle les crans (18) sont espacés les uns des autres d'une distance égale.

3. Boîte de vitesses à double embrayage (4) selon la revendication 1 ou 2, dans laquelle la distance (D1) entre deux crans (18) disposés côte-à-côte est légèrement plus grande que la dimension (D2) du doigt (12).

4. Boîte de vitesses à double embrayage (4) selon la revendication 1, 2 ou 3, dans laquelle la distance (D1) entre deux crans (18) disposés côte-à-côte est comprise entre une valeur minimum consistant en la dimension (D2) du doigt (12) et une valeur maximum égale au double de la dimension (D2) du doigt (12).

5. Boîte de vitesses à double embrayage (4) selon l'une quelconque des revendications 1 à 4, et comprenant pour chaque fourchette (11) un dispositif de retenue correspondant (19), qui est adapté pour maintenir la fourchette (11) dans la position actuelle avec une force de retenue constante, prédéterminée ; la barre de commande (13) étant capable d'appliquer à chaque fourchette (11) une force d'entraînement suffisamment supérieure à la force de retenue engendrée par le dispositif de retenue (19) respectif pour assurer le déplacement souhaité de la fourchette (11).

6. Boîte de vitesses à double embrayage (4) selon l'une quelconque des revendications 1 à 5, dans laquelle chaque fourchette (11) est portée par une tige (16), qui est montée axialement et coulissante et qui supporte une plaque (17) dans laquelle le cran (18) correspondant est défini.

7. Boîte de vitesses à double embrayage (4) selon l'une quelconque des revendications 1 à 6, dans laquelle, dans des conditions d'attente, s'il y a un pignon qui transmet le mouvement, le doigt (12) est disposé dans le cran (18) correspondant au pignon qui transmet le mouvement, pour prévenir le désengagement accidentel, involontaire, du rapport.
